# FASCICULE DE BREVET EUROPEEN

(11) **EP 2 455 265 B1**
(45) Date de publication et mention de la délivrance du brevet: **24.07.2013**
(21) Numéro de dépôt: 11187780.9
(22) Date de dépôt: 04.11.2011
(51) Int. Cl.: B60T 7/04, B60T 7/10, B60T 11/04, B60T 13/74, F16C 1/06, F16C 1/14, F16C 1/16, F16D 65/14

(54) **Actionneur de frein de stationnement**
Stellglied einer Feststellbremse
Parking brake actuator

(30) Priorité: 19.11.2010 FR 1004524
(43) Date de publication de la demande: 23.05.2012
(73) Titulaire: Chassis Brakes International B.V., 1011 VM Amsterdam (NL)
(72) Inventeur: Chancelier, Thierry, 95410 Groslay (FR); Chazelles, Arnaud, 94300 Vincennes (FR)
(74) Mandataire: Hurwic, Aleksander Wiktor

(56) Documents cités:
- EP-A2- 1 255 061
- WO-A1-2004/013501
- WO-A1-2006/050770
- FR-A1- 2 928 185
- GB-A- 2 151 758
- US-A- 2 899 836
- US-A- 4 696 203
- US-A- 6 053 064

## Description

### Domaine de l'invention

La présente invention concerne un actionneur de frein de stationnement composé d'un boîtier logeant un moteur électrique entraînant par l'intermédiaire d'une transmission à vis formée d'un écrou fixe en position et libre en rotation commandant une vis bloquée en rotation et libre en translation, cette vis ayant une extrémité reliée au câble du frein à main, logée dans un canon dont la sortie porte un embout avec une butée retenant la gaine du câble de frein.

L'invention concerne également un système de frein de stationnement équipé d'un tel actionneur de frein.

### Etat de la technique

FR 2 928 185, EP 1 255 061, WO 2006/050770, US 2 899 836, US 4 696 203, WO 2004/013501, GB 2 151 758 et US 6 053 064 décrivent la mise en oeuvre des câbles d'actionnement.

Les actionneurs de frein de stationnement ou freins à main remplaçant le levier de frein à main pour serrer le frein à main ou le libérer, sont commandés à partir d'un bouton qui déclenche la manoeuvre de serrage ou de libération du frein.

Un actionneur de frein de stationnement est constitué par un boîtier logeant un moteur électrique entraînant par des pignons, un écrou fixe en translation, qui déplace une tige filetée à laquelle est relié un arrêt du câble passant dans une gaine et relié au frein de stationnement (câble Bowden).

La tête de la vis qui porte l'arrêt de câble est logée dans un canon dont l'extrémité avant est munie d'une butée recevant et retenant la gaine du câble Bowden relié aux freins des roues.

Dans les conditions d'installation normales, le câble Bowden est aligné sur l'axe du canon qui est aussi celui de la vis de sorte que le dispositif fonctionne normalement sans qu'un effort autre qu'un effort de traction ne soit exercé sur le câble et la vis.

Toutefois, pour monter un tel frein à main électrique dans un encombrement très réduit, il faut, dans certaines conditions, cintrer fortement le câble Bowden, en particulier, à la sortie du canon de l'actionneur. Ce cintrage entraîne également un cintrage du câble proprement dit qui se répercute dans la partie libre du câble à l'intérieur du canon engendrant un effort radial appliqué à la vis. Cet effort radial se traduit par un bruit de broutage très fort du fait des efforts et des réactions exercés au niveau de l'écrou entraînant la vis.

Ce bruit qui serait perçu de manière très gênante à l'intérieur et à l'extérieur du véhicule, rendant impossible l'application d'un tel système de frein à un véhicule de tourisme sans place suffisante pour le câble de frein.

### But de l'invention

La présente invention a pour but de développer un moyen permettant d'adapter un actionneur de frein de stationnement dans un encombrement disponible très réduit, évitant les bruits de fonctionnement du frein de stationnement quelles que soient les conditions d'implantation de l'actionneur dans le véhicule et sans nécessiter de transformations importantes et coûteuses du système de frein de stationnement.

### Exposé et avantages de l'invention

A cet effet, l'invention concerne un actionneur de frein de stationnement du type défini ci-dessus caractérisé en ce qu'il comporte un manchon raidisseur emmanché sur l'extrémité du canon autour de la butée et de l'embout formant l'arrêt de la gaine du câble de frein pour bloquer l'embout et la butée et éviter la déformation de l'extrémité du câble de frein au-delà de la butée, de manière à aligner le câble intérieur sur l'axe xx de la vis à l'intérieur du canon et éviter tout effort transversal sur la vis et l'écrou qui l'entraîne.

Grâce à l'invention, en sortie d'actionneur le câble est aligné sur l'axe de la vis de l'actionneur de sorte que la partie libre du câble à l'intérieur du canon est elle-même dans l'axe et n'induit aucun effort radial ou transversal sur la tête de vis et, par suite, sur la vis. Celle-ci n'est alors soumise par l'écrou qui entraîne la translation de la vis qu'à des efforts de traction de sorte que le fonctionnement de l'actionneur reste silencieux même dans des conditions d'implantation extrêmes de l'actionneur avec un câble Bowden de frein de stationnement fortement cintré.

Ce moyen selon l'invention permet de transformer si nécessaire l'actionneur de frein en fonction du véhicule dans lequel il est implanté c'est-à-dire de l'importance de la place disponible pour le montage du frein à main entre l'actionneur et les roues à freiner.

Suivant une autre caractéristique avantageuse de l'invention, le canon comporte extérieurement un filetage et l'embout est formé d'un manchon de vissage de grand diamètre, destiné à coiffer l'extrémité du canon et un manchon extérieur de diamètre réduit formant avec le précédent, un épaulement s'appuyant contre la butée et le manchon raidisseur se compose d'une partie avant coiffant une partie du câble Bowden à l'avant du manchon de la butée, une partie intermédiaire chevauchant le manchon et le manchon extérieur de l'embout et formant une butée avec la partie arrière qui coiffe le manchon de vissage.

Suivant une autre caractéristique avantageuse, la partie arrière du manchon raidisseur se termine par un bourrelet de manière à se clipser derrière le bord arrière du manchon de vissage.

Cette forme de réalisation du manchon raidisseur permet une mise en place facile. Il en est de même de son enlèvement si nécessaire.

Suivant une autre caractéristique avantageuse le manchon raidisseur est une pièce en matière plastique. Pour s'adapter à différentes formes et sections de butée et d'embout, le manchon raidisseur comporte avantageusement une fente longitudinale.

### Dessins

La présente invention sera décrite ci-après de manière plus détaillée à l'aide d'un exemple de réalisation de l'invention comparé à l'état de la technique :
- la figure 1A montre un actionneur de frein de stationnement connu installé dans des conditions d'encombrement normales,
- la figure 1B montre l'actionneur de frein de la figure 1A installé dans des conditions d'encombrement extrêmement réduites,
- la figure 2 montre l'actionneur de frein de stationnement selon l'invention, installé également dans des conditions d'encombrement extrêmement réduit,
- la figure 3 est une vue en coupe agrandie d'un exemple de manchon raidisseur pour l'extrémité du canon au niveau de la fixation de la gaine du câble.

### Description d'un mode de réalisation de l'invention

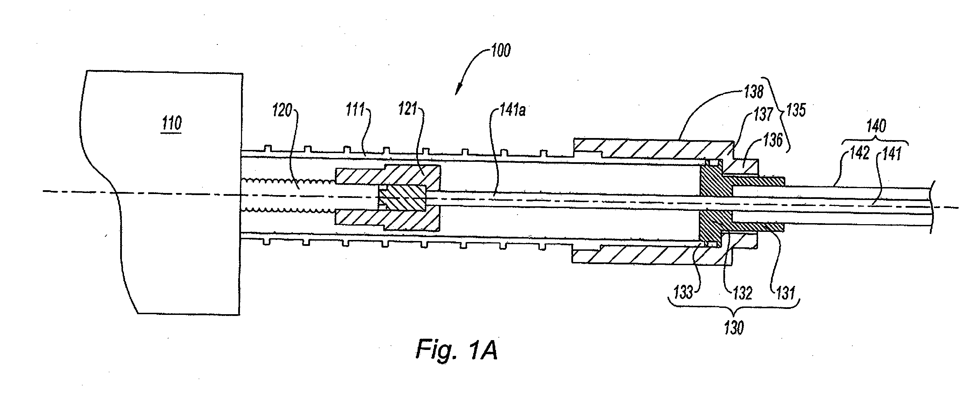

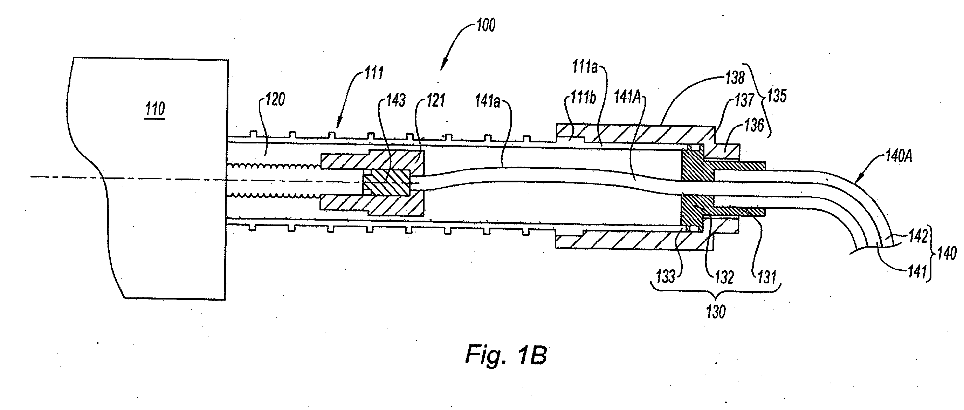

Selon les figures 1A, 1B, un actionneur de frein à main 100, se compose d'un boîtier 110 équipé d'un moteur électrique entraînant par un réducteur, une transmission à vis formée d'un écrou fixe en translation, recevant une vis 120, mobile en translation mais bloquée en rotation. Cette vis 120 se déplace dans le logement 111c d'axe xx du canon 111 du boîtier pour actionner les freins de stationnement par l'intermédiaire d'un câble Bowden 140 relié aux freins de stationnement. Le câble 140 est composé d'un câble intérieur 141 et d'une gaine 142. La vis 120 se termine par une tête 121 en forme d'écrou-chapeau qui fixe l'extrémité 141a du câble intérieur 141. La vis 120 est déplacée dans un sens ou dans l'autre en translation suivant son axe xx pour tirer ou relâcher le câble intérieur 141 et serrer le frein à main ou le libérer. L'engrènement entre l'écrou et la vis 120 est monodirectionnel, c'est-à-dire que seul l'écrou peut provoquer la translation de la vis. L'inverse n'est pas possible : un effort de traction exercé sur la vis 120 ne permet pas d'entraîner l'écrou de sorte que la vis 120 est bloquée dès que la rotation de l'écrou s'arrête. Le moteur et la transmission ne sont pas représentés dans les dessins.

L'extrémité 111a du canon 111 porte une butée 130 dans laquelle se place la gaine 142 du câble 140 pour être retenue.

La butée 130 se compose d'un manchon 131 recevant la gaine et traversé par le câble intérieur 141. Ce manchon 131 prolonge le corps 132 servant d'appui contre l'extrémité 111c du canon 111. Le corps 132 est lui-même bordé par une gorge 133 de façon à s'engager en partie dans l'ouverture du canon tout en s'appuyant contre celle-ci dans le sens d'une traction exercée sur le câble (vers la gauche sur la figure 1A).

La butée 130 est coiffée par un embout 135 formé d'un manchon extérieur 136 rejoignant un manchon de vissage 138 par l'intermédiaire d'une partie formant un épaulement 137. Le manchon extérieur 136 coiffe le manchon 131 et le manchon de vissage 138 chevauche l'extrémité du canon pour s'accrocher par vissage au filetage 111b en retrait de l'extrémité 111a du canon. La butée 130 est ainsi retenue fermement contre l'extrémité du canon. Le logement 111c à l'intérieur du canon 111 est libre et permet la circulation de la vis 120 et de sa tête 121.

A la figure 1A l'actionneur de frein 100 est installé dans des conditions d'encombrement normales de sorte que le câble Bowden 140 en sortie du canon 111 de l'actionneur reste aligné ou sensiblement aligné sur l'axe xx et n'induit pas de déformation dans la partie 141A du câble intérieur 141 dans le logement 111c du canon 111.

La figure 1B montre l'installation partielle de cet actionneur 100 de frein à main avec le câble 140 et son extrémité 140A très cintrée à cause de la place disponible, très limitée dans le véhicule.

Le cintrage de l'extrémité 140A se traduit par un cintrage du câble intérieur 141 qui se répercute sur la partie de câble 141A au-delà de la gaine, entre la butée 130 et la tête 121 de la vis 120. Le cintrage de l'extrémité 140 exerce des efforts sur la butée 130 fonctionnant alors comme une sorte de rotule transmettant la déformation du câble intérieur 141, de l'extérieur vers l'intérieur du canon 111. Cette déformation est représentée exagérée à la figure 1B pour la mettre en évidence en vue de sa description. En réalité la déformation du câble intérieur sur sa partie 141a est faible mais elle est suffisante pour créer des effets gênants. Ce cintrage exerce sur la tête de vis 121, un effort radial qu'il faut compenser. Cet effort radial pour lequel le système vis-écrou n'est pas conçu se traduit par un bruit de broutage très important lorsque l'écrou tourne sur la vis 120 que cela soit dans le sens du serrage du frein ou de sa libération puisque, dans les deux cas, le câble de frein reste cintré à l'intérieur du canon.

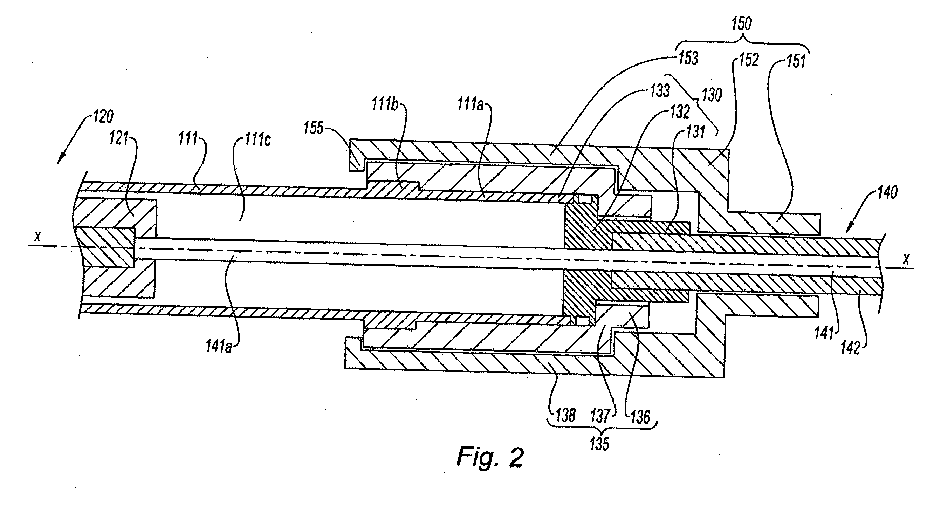

La figure 2 montre un mode de réalisation d'un actionneur de frein de stationnement 100 muni d'un manchon raidisseur 150 selon l'invention. Cette figure se limite à la représentation de l'extrémité avant 111a du canon portant comme cela apparaît à la figure 1A, la butée 130 et son embout 135. Le manchon raidisseur 150 chevauche la butée 130 et l'embout 135 en maintenant une longueur du câble Bowden 140 à la sortie du manchon 131 de la butée 130. Le manchon raidisseur 150 se compose d'une partie avant 151 tubulaire, de diamètre intérieur adapté au diamètre extérieur du câble Bowden 140 de manière à épouser celui-ci à l'avant du manchon 131 contre lequel la partie extérieure 151 vient s'appuyer.

La partie intermédiaire 152 coiffe à la fois le manchon 131 de la butée 130 et le manchon extérieur 136 de l'embout 135 en formant un épaulement venant contre le manchon extérieur 136. Le raidisseur 150 se poursuit côté arrière, c'est-à-dire le côté tourné vers l'actionneur, par une partie arrière 153, cylindrique couvrant toute la longueur de l'embout 135 pour s'accrocher derrière celui-ci par un léger bourrelet élastique 154.

Le manchon raidisseur 150 s'emmanche selon les nécessités d'installation de l'actionneur de frein de stationnement, sur la butée et l'embout en le glissant par-dessus le câble Bowden et en l'accrochant par clippage derrière l'embout 135.

La partie avant 151 du manchon raidisseur 150 permet de tenir fermement le câble Bowden 140 sur une certaine partie de sa longueur pour éviter que la partie de câble intérieur 141A dans le logement 111c ne soit déviée de la ligne d'axe xx et n'engendre les nuisances évoquées ci-dessus. Lorsque le manchon raidisseur 150 n'est pas nécessaire, celui-ci peut être enlevé. Néanmoins, comme il renforce le guidage du câble Bodwen en sortie de canon d'actionneur, il est préférable de le laisser en place si les conditions d'installation de l'actionneur le permettent.

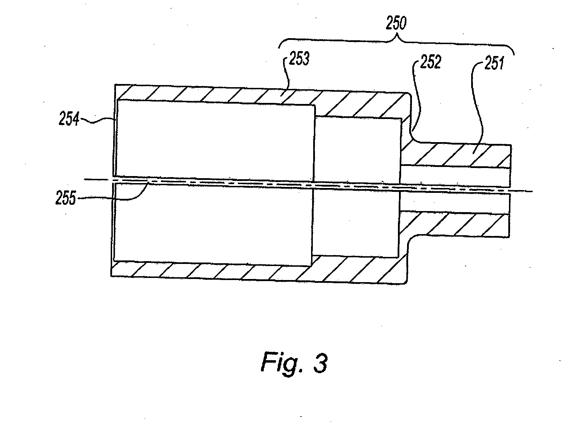

La figure 3 montre un autre mode de réalisation d'un manchon raidisseur 250 comportant comme le précédent une partie extérieure 251 suivie d'une partie intermédiaire 252 et d'une partie arrière 253, cette dernière étant munie d'un bourrelet 254. Ce manchon est muni d'une fente longitudinale 255 pour faciliter son adaptation à différentes géométries de butée 130 et d'embout 135.

L'invention s'applique de manière générale aux systèmes de frein de stationnement de véhicules automobiles.

### NOMENCLATURE

| | |
|---|---|
| 100 | Actionneur de frein de stationnement |
| 110 | Boîtier |
| 111 | Canon |
| 111a | Extrémité du canon |
| 111b | Filetage extérieur |
| 111c | Logement du canon |
| 120 | Vis |
| 121 | Tête de vis |
| 130 | Butée |
| 131 | Manchon |
| 132 | Corps (appui contre le canon) |
| 133 | Gorge |
| 135 | Embout |
| 136 | Manchon extérieur |
| 137 | Epaulement |
| 138 | Manchon de vissage |
| 140 | Câble Bowden |
| 140A | Extrémité cintrée du câble 140 |
| 141 | Câble intérieur |
| 141a | Extrémité du câble intérieur |
| 141A | Extrémité cintrée du câble intérieur 141 |
| 142 | Gaine |
| 150 | Manchon raidisseur |
| 151 | Partie extérieure |
| 152 | Partie intermédiaire |
| 153 | Partie arrière |
| 154 | Bourrelet |
| 250 | Manchon raidisseur |
| 251 | Partie extérieure |
| 252 | Partie intermédiaire |
| 253 | Partie arrière |
| 254 | Bourrelet |
| 255 | Fente longitudinale |

## Revendications

1. Actionneur de frein de stationnement composé d'un boîtier (110) logeant un moteur électrique entraînant par l'intermédiaire d'une transmission à vis formée d'un écrou fixe en position et libre en rotation commandant une vis (120) bloquée en rotation et libre en translation, cette vis (120) ayant une extrémité (121) reliée au câble (140) du frein à main, logée dans un canon (111) dont la sortie porte un embout (135) avec une butée (130) retenant la gaine (142) du câble de frein (140),
**caractérisé en ce qu'**
il comporte un manchon raidisseur (150) emmanché sur l'extrémité (111a) du canon (111) autour de la butée (130) et de l'embout (135) formant l'arrêt de la gaine (142) du câble de frein (140) pour bloquer l'embout (135) et la butée (130) et éviter la déformation de l'extrémité du câble de frein au-delà de la butée, de manière à aligner le câble intérieur (141) sur l'axe (xx) de la vis (120) à l'intérieur du canon (111) et éviter tout effort transversal sur la vis (120) et l'écrou qui l'entraîne.

2. Actionneur selon la revendication 1,
**caractérisé en ce que**
le canon (111) comporte extérieurement un filetage (111b) et l'embout (135) est formé d'un manchon de vissage (138) de grand diamètre, destiné à coiffer l'extrémité (11 la) du canon (111) et un manchon extérieur (136) de diamètre réduit formant avec le précédent, un épaulement (137) s'appuyant contre la butée (130) et le manchon raidisseur (150) se compose d'une partie avant (151) coiffant une partie du câble Bowden (140) à l'avant du manchon (131) de la butée (130), une partie intermédiaire (152) chevauchant le manchon (131) et le manchon extérieur (136) de l'embout (135) et formant une butée (154) avec la partie arrière (153) qui coiffe le manchon de vissage (138).

3. Actionneur selon la revendication 2,
**caractérisé en ce que**
la partie arrière (153) du manchon raidisseur (150) se termine par un bourrelet (154) de manière à se clipser derrière le bord arrière du manchon de vissage (138).

4. Actionneur selon la revendication 1,
**caractérisé en ce que**
le manchon raidisseur (150) est une pièce en matière plastique.

5. Système de frein de stationnement commandé par un câble et muni d'un actionneur de frein de stationnement selon l'une quelconque des revendications 1 à 4.

## Patentansprüche

1. Stellglied einer Feststellbremse, bestehend aus einem Gehäuse (110), in dem ein Elektromotor untergebracht ist, der mittels eines Schraubengetriebes angetrieben wird, das von einer ortsfesten und frei drehenden Mutter geformt wird, die eine Schraube (120) steuert, welche in Drehung blockiert und in Translationsbewegung frei ist, wobei diese Schraube (120) ein Ende (121) mit dem Kabel (140) der Handbremse verbunden hat, das in einem Rohr (111) untergebracht ist, dessen Ausgang einen Aufsatz (135) mit einem Anschlag (130) trägt, der die Hülle (142) des Bremskabels (140) zurückhält,
**dadurch gekennzeichnet, dass**
es eine Versteifungsmuffe (150) aufweist, die auf das Ende (111a) des Rohrs (111) um den Anschlag (130) und den Aufsatz (135) herum aufgeschoben ist, die die Arretierung der Hülle (142) des Bremskabels (140) formen, um den Aufsatz (135) und den Anschlag (130) zu blockieren und die Verformung des Endes des Bremskabels jenseits des Anschlags zu verhindern, um das innere Kabel (141) mit der Achse (xx) der Schraube (120) im Inneren des Rohrs (111) fluchtend auszurichten und jede Querkraft auf die Schraube (120) und die sie antreibende Mutter zu verhindern.

2. Stellglied nach Anspruch 1, **dadurch gekennzeichnet, dass** das Rohr (111) außen ein Gewinde (111b) aufweist und der Aufsatz (135) von einer Schraubmuffe (138) großen Durchmessers geformt wird, die dazu bestimmt ist, das Ende (111a) des Rohrs (111) zu bedecken, und wobei eine Außenmuffe (136) reduzierten Durchmessers mit der vorhergehenden eine Schulter (137) formt, die sich gegen den Anschlag (130) drückt, und die Versteifungsmuffe (150) zusammengesetzt ist aus einem vorderen Teil (151), der einen Teil des Bowdenzugs (140) vor der Muffe (131) des Anschlags (130) bedeckt, einem Zwischenteil (152), der die Muffe (131) und die Außenmuffe (136) des Aufsatzes (135) überlappt und einen Anschlag (154) mit dem hinteren Bereich (153) formt, der die Schraubmuffe (138) bedeckt.

3. Stellglied nach Anspruch 2, **dadurch gekennzeichnet, dass** der hintere Bereich (153) der Versteifungsmuffe (150) in einem Wulst (154) endet, um sich hinter den hinteren Rand der Schraubmuffe (138) einzuklinken.

4. Stellglied nach Anspruch 1, **dadurch gekennzeichnet, dass** die Versteifungsmuffe (150) ein Kunststoffbauteil ist.

5. Feststellbremsensystem, das von einem Kabel gesteuert wird und mit einem Festellbremsenstellglied nach einem der Ansprüche 1 bis 4 versehen ist.

## Claims

1. Parking brake actuator including a housing (110) accommodating an electric motor driving through a worm gear formed of a fixed nut able to rotate freely and driving a screw (120) immobilized against rotation and free to move in translation, this screw (120) having one end (121) connected to the cable (140) of the hand brake, housed in a bush (111) whose output carries a ferrule (135) with a stop (130) for retaining the sheath (142) of the brake cable (140), **characterized in that** it includes a reinforcing sleeve (150) fitted onto the end (111a) of the bush (111) around the stop (130) and the ferrule (135) forming the stop for the sheath (142) of the brake cable (140) to immobilize the ferrule (135) and the stop (130) and prevent deformation of the end of the brake cable beyond the stop, so as to align the inner cable (141) on the axis (xx) of the screw (120) inside the bush (111) and prevent any lateral force on the screw (120) and the nut which drives it.

2. Actuator according to claim 1, **characterized in that** the bush (111) includes an external screwthread (111b) and the ferrule (135) is formed of a threaded cap (138) of relatively large diameter adapted to cover the end (111a) of the bush (111) and an outer sleeve (136) of relatively small diameter forming with the cap a shoulder (137) bearing against the stop (130) and **in that** the reinforcing sleeve (150) comprises a front portion (151) covering a portion of the Bowden cable (140) in front of the sleeve (131) of the stop (130) and an intermediate portion (152) straddling the sleeve (131) and the outer sleeve (136) of the ferrule (135) and forming a stop (154) with the rear portion (153) which covers the threaded cap (138).

3. Actuator according to claim 2, **characterized in that** the rear portion (153) of the reinforcing sleeve (150) terminates in a bead (154) so as to be clipped behind the rear edge of the threaded cap (138).

4. Actuator according to claim 1, **characterized in that** the reinforcing sleeve (150) is a plastic material part.

5. Parking brake system operated by a cable and provided with a parking brake actuator according to any one of claims 1 to 4.
